**Europäisches Patentamt**

**European Patent Office**

**Office européen des brevets**

(19)

(11) Veröffentlichungsnummer : **0 355 408 B1**

(12)
# EUROPÄISCHE PATENTSCHRIFT

(45) Veröffentlichungstag der Patentschrift :
**21.10.92 Patentblatt 92/43**

(51) Int. Cl.$^5$ : **C08F 8/32,** C09D 131/02, C09D 125/02

(21) Anmeldenummer : **89113346.4**

(22) Anmeldetag : **20.07.89**

(54) Aminogruppenhaltige Copolymerisate, Verfahren zu ihrer Herstellung sowie ihre Verwendung in Beschichtungsmitteln.

Verbunden mit 89908409.9/0428553 (europäische Anmeldenummer/Veröffentlichungsnummer) durch Entscheidung vom 30.10.91.

(30) Priorität : **13.08.88 DE 3827587**

(43) Veröffentlichungstag der Anmeldung :
**28.02.90 Patentblatt 90/09**

(45) Bekanntmachung des Hinweises auf die Patenterteilung :
**21.10.92 Patentblatt 92/43**

(84) Benannte Vertragsstaaten :
**AT BE CH DE ES FR GB IT LI LU NL SE**

(56) Entgegenhaltungen :
**EP-A- 0 071 070**
**DE-A- 2 032 647**
**FR-A- 2 271 132**
**US-A- 4 039 734**

(73) Patentinhaber : **BASF Lacke + Farben AG**
**Glasuritstrasse 1**
**W-4400 Münster (DE)**

(72) Erfinder : **Jung, Werner Alfons, Dr.**
**Uhrwerkerstrasse 65**
**W-4715 Ascheberg (DE)**

(74) Vertreter : **Münch, Volker, Dr. et al**
**c/o BASF Lacke + Farben AG Patentabteilung**
**Glasuritstrasse 1 Postfach 61 23**
**W-4400 Münster (DE)**

## Beschreibung

Die Erfindung betrifft in organischen Lösungsmitteln lösliche, aminogruppenhaltige Copolymerisate, die aus - mittels radikalischer Lösungspolymerisation hergestellten - alkylestergruppenhaltigen Copolymerisaten durch Aminolyse herstellbar sind, Verfahren zu ihrer Herstellung sowie ihre Verwendung in Beschichtungsmitteln.

Die Möglichkeit, aminogruppenhaltige Copolymere durch Aminolyse von alkyl(meth)acrylathaltigen Copolymeren herzustellen, ist bereits aus der US-A- 4,120,839 bekannt. Bei dem dort beschriebenen Verfahren werden mittels radikalischer Polymerisation zunächst aus Styrol und mindestens 35 mol% Alkyl(meth)acrylat Copolymere hergestellt, die durch Erhitzen, vorzugsweise in einem inerten Lösungsmittel, in Gegenwart eines Katalysators, mit aliphatischen Polyaminen in die aminogruppenhaltigen Copolymeren überführt werden. Eingesetzt werden diese aminogruppenhaltigen Copolymeren zusammen mit Epoxidharzen in Beschichtungsmitteln. Die Verwendung von Vinylester-Monomeren bei der Herstellung der alkylestergruppenhaltigen Copolymerisate und die sich daraus ergebenden Probleme bei der Polymerisation sind jedoch nicht beschrieben.

Auch bei den in der DE-C- 30 43 355, EP 40 288 und US-A- 3,634,372 beschriebenen aminogruppenhaltigen Copolymeren werden keine Vinylester-Monomeren bei der Herstellung mitverwendet.

Außerdem ist es bekannt, aminogruppenhaltige Copolymerisate durch die Verwendung von aminogruppenhaltigen Monomeren bei der Polymerisation (vgl. z.B. EP 165 580, EP 167 042 und EP 181 478) oder durch Aminolyse glycidylgruppenhaltiger Copolymerisate (vgl. z.B.DE-A- 34 12 657) herzustellen.

Bekannt ist weiterhin, daß Probleme bei der Herstellung von Acrylatcopolymerisaten auftreten, wenn Monomere mit im Vergleich zu Acrylatmonomeren stark unterschiedlicher Reaktivität, wie z.B. Vinylester von in α-Stellung verzweigten, aliphatischen Monocarbonsäuren mit 5 bis 15 C-Atomen, eingesetzt werden. In diesen Fällen gelingt es schwer, einheitliche, d.h. statistisch homogen verteilte Copolymere zu erhalten.

Eine Lösungsmöglichkeit dieses Problems ist das in der US-A- 4,039,734 beschriebene Verfahren zur Copolymerisation unterschiedlich reaktiver Monomerer, bei dem wenigstens ein Teil des reaktiven Monomers in solch einer Menge kontinuierlich zu der Reaktionsmischung hinzugegeben wird, daß das relative Monomerenverhältnis konstant bleibt. Die hierfür jeweils erforderliche Monomerenmenge wird mit Hilfe der frei werdenden Reaktionswärme ermittelt.

Bei dem in der DE-C- 20 32 647 beschriebenen Verfahren werden einheitliche Vinylester-, Vinylaromat und Hydroxyacrylat-Copolymerisate entsprechend durch stufenweise Zugabe der einzelnen Monomeren erhalten. Bei diesem Verfahren wird die Gesamtmenge Vinylester zusammen mit 5 bis 15 Gew.% der Gesamtmenge des Vinylaromaten und der Gesamtmenge der anderen hydroxyfunktionellen Monomeren und ungesättigten Carbonsäuren vorgelegt. Die restliche Monomerenmenge wird dann entweder als Ganzes allmählich zugefügt oder aber so zudosiert, daß der Zulauf der OH- und COOH-Monomeren zeitlich länger dauert als der Vinylaromatenzulauf. Nachteilig bei diesem Verfahren sind der sehr hohe Restmonomerengehalt (d.h. die Menge nicht umgesetztes Ausgangsmonomer, ausgedrückt in Gew.%, bezogen auf die ursprünglich eingesetzte Gesamtmenge dieses Monomers) von bis zu 40 Gew.% an Vinylester bei Verwendung eines hohen Vinylaromatenanteils von bis zu 50 Gew.% und die damit verbundenen Toxizitäts-Probleme. Weiterhin ungünstig im Hinblick auf die Lösemittelbelastung der Umgebung beim Trocknen der Lackfilme ist der durch die hohe Viskosität der Bindemittellösungen verursachte hohe Lösungsmittelanteil der Beschichtungsmittel. Zusätzlich besteht die Gefahr von Trübungserscheinungen bei Polymerlösungen mit höherem Festkörpergehalt, die nur durch Zugabe weiterer Lösungsmittels beseitigt werden können.

Auch die englischsprachige technische Information "VeoVa polymers LR-40 and LR-2041 for water-thinnable paints" der Firma Shell beschreibt derartige Vinylester, Vinylaromat und Hydroxyalkylester enthaltende Copolymerisate, die allerdings ebenfalls die gerade oben genannten Nachteile aufweisen.

Schließlich sind auch einige Massenpolymerisationsverfahren zur Herstellung von Vinylester enthaltenden Copolymerisaten bekannt, bei denen ebenfalls die Gesamtmenge des Vinylesters, ggf. mit einem Teil der Gesamtmenge der anderen Monomeren und ggf. Initiator erhitzt wird und dann die übrige Menge an Monomeren und Initiator allmählich zugesetzt wird (vgl. z.B. DE-C- 24 22 043 und DE-A- 26 15 101). Bei diesen Verfahren gelingt es zwar, den Vinylester vollständig einzubauen (Restmonomerengehalt <10 Gew.%), jedoch sind die so erhaltenen Copolymerisatlösungen nach dem Anlösen der Polymermasse trübe und für Lackformulierungen nicht geeignet.

Der Erfindung lag somit die Aufgabe zugrunde, aminogruppenhaltige Copolymerisate zur Verfügung zu stellen, die mittels eines einfachen Verfahrens herstellbar sind, die auch bei Verwendung eines hohen Vinylaromatenanteils von bis zu 50 Gew.%, bezogen auf die Gesamtmonomerenmenge, bei der Herstellung der Zwischenstufe der alkylestergruppenhaltigen Copolymerisate einen niedrigen Restmonomerengehalt (<10 Gew.%) an Vinylester-Monomeren aufweisen und die klare Lösungen ergeben. Insbesondere sollten die erhaltenen Lösungen der aminogruppenhaltigen Copolymerisate eine möglichst niedrige Viskosität aufweisen.

Die unter Verwendung dieser Copolymerisate hergestellten Beschichtungsmittel sollten entsprechend bei einer für die Verarbeitung günstigen Viskosität von 16 bis 20 s, gemessen im Auslaufbecher nach DIN 4, einen möglichst hohen Festkörpergehalt aufweisen, gute Pigmentierbarkeit zeigen und zu Überzügen mit guten technologischen Eigenschaften, insbesondere guter Härte und Benzinbeständigkeit führen.

Überraschenderweise wird diese Aufgabe durch ein aminogruppenhaltiges Copolymerisat (B) gelöst, das durch Aminolyse von - mittels radikalischer Lösungspolymerisation hergestellten - alkylestergruppenhaltigen Copolymerisaten (A) herstellbar ist und das dadurch gekennzeichnet ist, daß das aminogruppenhaltige Copolymerisat (B) herstellbar ist, indem

(A) aus

a1) 5 bis 25 Gew.%, bevorzugt 10 bis 20 Gew.%, eines oder mehrerer Vinylester von Monocarbonsäuren, bevorzugt Vinylester von in $\alpha$-Stellung verzweigten Monocarbonsäuren mit 5 bis 15 C-Atomen je Molekül,
a2) 10 bis 50 Gew.%, bevorzugt 20 bis 45 Gew.%, eines oder mehrerer vinylaromatischer Kohlenwasserstoffe,
a3) 10 bis 40 Gew.%, bevorzugt 15 bis 35 Gew.%, eines oder mehrerer Alkylester von aliphatischen, olefinisch ungesättigten Carbonsäuren mit 1 bis 6 C-Atomen, bevorzugt 1 bis 4 C-Atomen, im Alkylrest und
a4) 0 bis 40 Gew.% anderer ethylenisch ungesättigter, copolymerisierbarer Monomerer, wobei die Summe der Komponenten a1 bis a4 jeweils 100 Gew.% ergibt,

durch radikalische Lösungspolymerisation bei Temperaturen von 130 bis 200°C, bevorzugt 150 bis 180°C, ein alkylestergruppenhaltiges Copolymerisat (A) synthetisiert worden ist, indem

I) mindestens 60 Gew.%, bevorzugt 100 Gew.%, der Gesamtmenge der Komponente a1 vorgelegt werden,
II) die Komponenten a2 bis a4 und der ggf. vorhandene Rest der Komponente a1 innerhalb eines für alle Komponenten gleich langen Monomerenzugabezeitraumes so zudosiert werden, daß

1) die pro Zeiteinheit zugegebene Menge der Komponente a1 innerhalb des Monomerenzugabezeitraumes konstant bleibt oder abnimmt,
2) die pro Zeiteinheit zugegebene Menge der Komponenten a3 und a4 innerhalb des Monomerenzugabezeitraumes konstant bleibt und
3) die innerhalb des ersten Drittels des Monomerenzugabezeitraumes zugegebene Menge der Komponente a2 15 bis 30 Gew.%, bevorzugt 18 bis 26 Gew.%, der Gesamtmenge der Komponente a2, innerhalb des zweiten Drittels 25 bis 40 Gew.%, bevorzugt 30 bis 38 Gew.% und innerhalb des letzten Drittels 35 bis 60 Gew.%, bevorzugt 40 bis 50 Gew.%, der Gesamtmenge der Komponente a2 beträgt und

(B) das Copolymerisat (A) mit Polyaminen zu einem aminogruppenhaltigen Copolymerisat (B) mit einer Aminzahl von 30 bis 150 mg KOH/g und einem mittleren Molekulargewicht (Zahlenmittel) des Copolymerisats (B) von 1500 bis 8000 umgesetzt worden ist.

Als Komponente a1 werden Vinylester von Monocarbonsäuren, bevorzugt Vinylester von in $\alpha$-Stellung verzweigten Monocarbonsäuren mit 5 bis 15 C-Atomen je Molekül, eingesetzt. Die verzweigten Monocarbonsäuren können erhalten werden durch Umsetzen von Ameisensäure oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppe vorwiegend an einem quaternären Kohlenstoffatom sitzt. Andere olefinische Ausgangsstoffe sind z.B. Propylentrimer, Propylentetramer und Diisobutylen. Die Vinylester können auch auf an sich bekannte Weise aus den Säuren hergestellt werden, z.B. indem man die Säuren mit Acetylen reagieren läßt.

Besonders bevorzugt werden - wegen der guten Verfügbarkeit - Vinylester von gesättigten aliphatischen Monocarbonsäuren mit 9 bis 11 C-Atomen, die am $\alpha$-C-Atom verzweigt sind. Besonders bevorzugt ist außerdem der Vinylester der p-Tertiärbutyl-benzoesäure. Beispiele für weitere, geeignete Vinylester sind Vinylacetat und Vinylpropionat.

Die Menge der Komponenten a1 beträgt 5 bis 25 Gew.%, bevorzugt 10 bis 20 Gew.%.

Die Komponente a2 ist eine monovinylaromatische Verbindung. Vorzugsweise enthält sie 8 bis 9 Kohlenstoffatome je Molekül. Beispiele für geeignete Verbindungen sind Styrol, Vinyltoluole, $\alpha$-Methylstyrol, Chlorstyrole, o-, m- oder p-Methylstyrol, 2,5-Dimethylstyrol, p-Methoxystyrol, p-tert.- Butylstyrol, p-Dimethylaminostyrol, p-Acetamidostyrol und m-Vinylphenol. Bevorzugt werden Vinyltoluole sowie insbesondere Styrol eingesetzt. Die Menge an Komponente a2 beträgt 10 bis 50 Gew.%, bevorzugt 20 bis 45 Gew.%.

Als Komponente a3 werden Alkylester von aliphatischen, olefinisch ungesättigten Carbonsäuren mit 1 bis 6 C-Atomen, bevorzugt 1 bis 4 C-Atomen, im Alkylrest eingesetzt.

Beispiele hierfür sind Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat,

3

Cyclohexyl(meth)acrylat sowie die entsprechenden Ester der Malein-, Fumar-, Croton-, Isocroton-, Vinylessig- und Itaconsäure.

Die Komponente a3 wird in einer Menge von 10 bis 40 Gew.%, bevorzugt 15 bis 35 Gew.%, eingesetzt.

Zum Aufbau des alkylestergruppenhaltigen Copolymerisats (A) können außerdem 0 bis 40 Gew.% anderer, ethylenisch ungesättigter, copolymerisierbarer Monomerer (Komponente a4) eingesetzt werden. Die Auswahl dieser Monomerer ist nicht besonders kritisch. Es ist aber darauf zu achten, daß der Einbau dieser Monomeren nicht zu unerwünschten Eigenschaften des Copolymerisats führt. So richtet sich die Auswahl der Komponente a4 weitgehend nach den gewünschten Eigenschaften der härtbaren Zusammensetzung in bezug auf Elastizität, Härte, Verträglichkeit und Polarität.

Bevorzugt werden als Komponente a4 Amide der Acryl- und Methacrylsäure sowie ihre Derivate eingesetzt, wie beispielsweise Acrylamid, Methacrylamid, N-Alkylamide wie z.B. N-Methyl(meth)acrylamid, N-Ethyl-(meth)acrylamid, N-Propyl(meth)acrylamid, N-Isopropyl(meth)acrylamid, N-Butyl(meth)acrylamid, N-Isobutyl-(meth)acrylamid, N-Pentyl(meth)acrylamid, N-Hexyl(meth)acrylamid, N-Cyclohexyl(meth)acrylamid, N-Octyl-(meth)acrylamid, N-Dodecyl(meth)acrylamid und N-Decyl(meth)acrylamid. Hierbei bevorzugt sind langkettige alkylsubstituierte Acryl- und Methacrylamidderivate, ganz besonders bevorzugt Dodecylmethacrylamid.

Weiterhin bevorzugt als Komponente a4 eingesetzt werden aminolysebeständige Verbindungen wie z.B. N-Vinylpyrrolidon.

Als Komponente a4 geeignet sind weiterhin ungesättigte Nitrile wie z.B. (Meth)Acrylnitrile und Verbindungen wie z.B. (Meth)Acrylsäure, Vinylchlorid, Vinylidenchlorid, Vinylfluorid und Vinylidenfluorid.

Die Polymerisation der Monomerkomponenten a1 bis a4 wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie mit einem Rückflußkühler, in dem flüchtige Bestandteile, wie z.B. Styrol, zurückgehalten werden, ausgerüstet. Die Polymerisationsreaktion wird bei Temperaturen von 130 bis 200°C, bevorzugt 150 bis 180°C, unter Verwendung von Polymerisationsinitiatoren und ggf. Polymerisationsreglern durchgeführt.

Geeignete radikalische Initiatoren sind organische Peroxide, wie z.B. Dibenzoylperoxid, Dicumylperoxid, Cumolhydroperoxid, Di-tert.-butylperoxid, tert.-Butylhydroperoxid, 2,2-Di-tert.-butylperoxybutan, tert.-Amylperbenzoat, 1,3-Bis(tert.-butylperoxyisopropyl)-benzol, Diisopropylbenzolmonohydroperoxid und Diacylperoxide, wie z.B. Diacetylperoxid, Peroxyketale, wie z.B. 2,2-Di-(tert.-amylperoxy)-propan und Ethyl-3,3- di-(tert.-amylperoxy)-butyrat, thermolabile hochsubstituierte Ethanderivate, beispielsweise auf Basis silylsubstituierter Ethanderivate und auf Basis Benzpinakol. Weiterhin können auch aliphatische Azoverbindungen, wie beispielsweise Azobiscyclohexannitril, eingesetzt werden. Je nach eingesetzten Monomeren besteht bei Verwendung von Azoverbindungen allerdings die Gefahr von Gelbfärbungen der Polymeren, die - je nach Verwendungszweck der Polymeren - störend sein können, so daß in diesen Fällen andere Initiatoren eingesetzt werden müssen.

Die Initiatormenge beträgt in den meisten Fällen 0,1 bis 5 Gew.%, bezogen auf die zu verarbeitende Monomerenmenge, sie kann ggf. aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 1 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator vorzulegen.

Bevorzugt wird die Reaktion in Gegenwart von Polymerisationsreglern durchgeführt, da so eine engere Molgewichtsverteilung erreicht und Trübungen der Polymerlösungen besser vermieden werden können. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure.

Diese Regler werden in einer Menge von bis zu 2 Gew.%, bezogen auf die zu verarbeitende Monomerenmenge, eingesetzt. Vorzugsweise werden sie in einem der Monomerenzuläufe gelöst und mit den Monomeren zugegeben. Bevorzugt ist die zugegebene Reglermenge zeitlich konstant.

Die Polymerisation wird in einem hochsiedenden, organischen, gegenüber den eingesetzten Monomeren inerten, Lösungsmittel durchgeführt. Beispiele für geeignete Lösungsmittel sind hochsiedende Alkohole, wie z.B. n-Hexanol, 2-Ethylhexanol, Isooctylalkohol, Isononylalkohol, Isodecylalkohol, Isotridecylalkohol, Cyclohexanol, Methylcyclohexanol, Benzylalkohol, Methylbenzylalkohol, Tetrahydrofufurylalkohol, Diacetonalkohol, 2,6-Dimethyl-4-heptanol, 4-Methyl-2-pentanol, Tridecanol; Glykole und Glykolderivate, wie z.B. Ethylenglykol, 1,2-Propylenglykol, 1,3-Butylenglykol, Butandiol-1,4, Hexylenglykol, 2-Ethylhexandiol-1,3, Diethylenglykol, Triethylenglykol, Dipropylenglykol, Methyldiglykol, Ethyldiglykol, Butyldiglykol, Hexyldiglykol, Tripropylenglykolmethylether, Methoxytriglykol, Ethylglykolacetat, Butylglykolacetat, Ethyldiglykolacetat, Ethylenglykoldiacetat; höher substituierte Aromaten, wie z.B. Solvent Naphtha®, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin.

Es ist erfindungswesentlich, daß die Copolymerisation der Komponenten a1 bis a4 folgendermaßen durchgeführt wird:

In dem Reaktor werden zunächst mindestens 60 Gew.%, bevorzugt 100 Gew.%, der insgesamt einzusetzenden Menge der Komponente a1 zusammen mit einem Teil der insgesamt einzusetzenden Lösungsmittelmenge vorgelegt und auf die jeweilige Reaktionstemperatur aufgeheizt. Die restliche Menge des Lösungsmittels wird - wie bereits beschrieben - vorzugsweise zusammen mit dem Katalysator allmählich zugefügt. Die ggf. noch vorhandene restliche Menge der Komponente a1 sowie die übrigen Monomeren (Komponenten a2, a3 und a4) werden innerhalb eines für alle Komponenten gleich langen Monomerenzugabezeitraumes (beträgt i.a. 2-10 h, wie für Acrylatcopolymerisationen üblich) zu der vorgelegten Komponente a1 folgendermaßen zudosiert:

1) Die pro Zeiteinheit zugegebene Menge der ggf. noch vorhandenen Komponente a1 (d.h. die Restmenge der Komponente a1, die nicht vorgelegt wurde) bleibt innerhalb des Monomerenzugabezeitraumes konstant oder nimmt ab, wobei die letzte Verfahrensvariante bevorzugt ist. Im Fall einer konstanten Zugabemenge wird die Komponente a1 bevorzugt zusammen mit den Komponenten a3 und a4 zudosiert.

2) Die pro Zeiteinheit zugegebene Menge der Komponenten a3 und a4 bleibt innerhalb des Monomerenzugabezeitraumes konstant.

3) Die pro Zeiteinheit zugegebene Menge der Komponente a2 wird innerhalb des Monomerenzugabezeitraumes so variiert, daß die innerhalb des ersten Drittels des Monomerenzugabezeitraumes insgesamt zugegebene Menge der Komponente a2 15 bis 30 Gew.%, bevorzugt 18 bis 26 Gew.%, der Gesamtmenge der Komponente a2 beträgt. Innerhalb des zweiten Drittels des Monomerenzugabezeitraumes werden insgesamt 25 bis 40 Gew.%, bevorzugt 30 bis 38 Gew.% und innerhalb des letzten Drittels des Monomerenzugabezeitraumes werden 35 bis 60 Gew.%, bevorzugt 40 bis 50 Gew.%, der Gesamtmenge der Komponente a2 zudosiert, wobei selbstverständlich die Summe der Zugabemengen im 1., 2 und 3. Drittel 100 Gew.% beträgt.

Für die Variation der pro Zeiteinheit zugegebenen Menge der Komponente a2 bestehen verschiedene Möglichkeiten, entscheidend ist nur, daß die oben angegebenen, im jeweiligen Drittel insgesamt zugegebenen Mengen eingehalten werden. So besteht beispielsweise die Möglichkeit einer stufenweisen Veränderung der pro Zeiteinheit zugegebenen Menge der Komponente a2. Die Zahl der Stufen, bei denen die Zugabemenge jeweils geändert wird, kann beliebig gewählt werden. So kann beispielsweise die Zugabemenge pro Zeiteinheit der Komponente a2 nur zu Beginn des zweiten und/oder zu Beginn des dritten Drittels erhöht werden. Innerhalb des Drittels bleibt die Zugabemenge pro Zeiteinheit dann jeweils konstant. Es ist aber auch möglich, die pro Zeiteinheit zugegebene Menge der Komponente a2 kontinuierlich zu verändern, entsprechend dem Grenzfall einer unendlichen Stufenzahl.

Die Zugabe der Komponenten in der genannten Weise fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkörpergehalt ergeben.

In einem zweiten Schritt werden die Copolymerisate (A) durch Umsetzen mit einem Polyamin in die aminogruppenhaltigen Copolymerisate (B) überführt. Bevorzugt werden für die Aminolyse Polyamine mit mindestens einer primären Aminogruppe eingesetzt. Besonders bevorzugt sind diprimäre Diamine, wie z.B. Ethylendiamin, Tri-, Tetra-, Penta-, Hexa-, Hepta- und Nonamethylendiamin, 2,2,4- bzw. 2,4,4-Trimethylhexamethylendiamin, Propylendiamin, 1,3- bzw. 1,4-Butylendiamin, Methandiamin, Isophorondiamin und 3,3'-Dimethyl-4,4'-diaminodicyclohexylmethan. Ferner kommen in Betracht aromatische diprimäre Diamine, wie z.B. Benzidin, Diaminodiphenylmethan, Phenylendiamine, Toluylendiamine, Xylylendiamine sowie Diamine mit 3 Benzolkernen im Molekül, wie Bis(4-aminophenyl)- $\alpha,\alpha'$-p-xylol.

Für die Aminolyse geeignet sind außerdem auch Polyamine mit mindestens einer primären und mindestens einer weiteren Aminogruppe, wie z.B. Diethylentriamin, Triethylentetramin, Tetraethylenpentamin, Dipropylentriamin, Tripropylentetramin, Tetrapropylenpentamin, Tris-(2-aminoethyl)-amin und N-(2-Aminoethyl)-ethanol.

Die Umsetzung des Polyamins mit dem alkylestergruppenhaltigen Polymer (A) erfolgt bei Temperaturen zwischen 50 und 200°C. Wenn das Polymer (A) zu aminolysierende Methacrylatestergruppen enthält, arbeitet man bevorzugt bei Temperaturen zwischen 120 und 160°C, im Falle von Acrylatestergruppen bei Temperaturen zwischen 100 und 125°C.

Vorzugsweise wird die Reaktion in Gegenwart von 0,01 bis 1,0 Gew.%, bezogen auf das Gewicht des Polyamins, eines Katalysators durchgeführt. Geeignet sind Metallalkoxide, z.B. Natriummethoxid, Kalium-t-butoxid; Metallhydroxide, z.B. Natrium- und Kaliumhydroxid; Ammoniumsalze, z.B. Ammoniumchlorid oder auch bifunktionelle Katalysatoren wie z.B. 2-Hydroxypyridin.

Die Menge an eingesetztem Polyamin wird so gewählt, daß das entstehende Copolymerisat (B) eine Aminzahl von 30 bis 150 mg KOH/g, bevorzugt 50 bis 120 mg KOH/g aufweist. Das mittlere Molekulargewicht (Zahlenmittel) des Copolymerisats (B) liegt zwischen 1500 und 8000.

Gegenstand der Erfindung ist auch ein Verfahren zur Herstellung aminogruppenhaltiger Copolymerisate durch Aminolyse von - mittels radikalischer Lösungspolymerisation hergestellten - alkylestergruppenhaltigen Copolymerisaten (A), das dadurch gekennzeichnet ist, daß

(A)

a1) 5 bis 25 Gew.%, bevorzugt 10 bis 20 Gew.%, eines oder mehrerer Vinylester von Monocarbonsäuren, bevorzugt Vinylester von in $\alpha$-Stellung verzweigten Monocarbonsäuren mit 5 bis 15 C-Atomen je Molekül,
a2) 10 bis 50 Gew.%, bevorzugt 20 bis 45 Gew.%, eines oder mehrerer vinylaromatischer Kohlenwasserstoffe,
a3) 10 bis 40 Gew.%, bevorzugt 15 bis 35 Gew.%, eines oder mehrerer Alkylester von aliphatischen, olefinisch ungesättigten Carbonsäuren mit 1 bis 6 C-Atomen, bevorzugt 1 bis 4 C-Atomen, im Alkylrest und
a4) 0 bis 40 Gew.% anderer ethylenisch ungesättigter, copolymerisierbarer Monomerer, wobei die Summe der Komponenten a1 bis a4 jeweils 100 Gew.% ergibt,

bei Temperaturen von 130 bis 200°C, bevorzugt 150 bis 180°C, zu einem Copolymerisat (A) umgesetzt werden, wobei

I) mindestens 60 Gew.%, bevorzugt 100 Gew.%, der Gesamtmenge der Komponente a1 vorgelegt werden,
II) die Komponenten a2 bis a4 und der ggf. vorhandene Rest der Komponente a1 innerhalb eines für alle Komponenten gleich langen Monomerenzugabezeitraumes so zudosiert werden, daß

1) die pro Zeiteinheit zugegebene Menge der Komponente a1 innerhalb des Monomerenzugabezeitraumes konstant bleibt oder abnimmt,
2) die pro Zeiteinheit zugegebene Menge der Komponenten a3 und a4 innerhalb des Monomerenzugabezeitraumes konstant bleibt und
3) die innerhalb des ersten Drittels des Monomerenzugabezeitraumes zugegebene Menge der Komponente a2 15 bis 30 Gew.%, bevorzugt 18 bis 26 Gew.%, der Gesamtmenge der Komponente a2, innerhalb des zweiten Drittels 25 bis 40 Gew.%, bevorzugt 30 bis 38 Gew.% und innerhalb des letzten Drittels 35 bis 60 Gew.%, bevorzugt 40 bis 50 Gew.%, der Gesamtmenge der Komponente a2 beträgt und

(B) das Copolymerisat (A) mit Polyaminen zu einem aminogruppenhaltigen Copolymerisat (B) mit einer Aminzahl von 30 bis 150 mg KOH/g und einem mittleren Molekulargewicht (Zahlenmittel) des Copolymerisats (B) von 1500 bis 8000 umgesetzt wird.

Die in diesem Verfahren einsetzbaren Komponenten a1 bis a4 sowie die Durchführung des erfindungsgemäßen Verfahrens sind bereits ausführlich im Zusammenhang mit den erfindungsgemäßen Copolymerisaten (B) beschrieben, so daß hier nur auf diese Beschreibung verwiesen wird.

Gegenstand der vorliegenden Erfindung sind weiterhin Beschichtungsmittel, die die erfindungsgemäßen Copolymerisate (B) als Bindemittelkomponente enthalten. Als Härterkomponente eignen sich in diesen Beschichtungsmitteln Aminoplastharze, Epoxide, Verbindungen bzw. Harze, die zur Michael-Addition befähigte Doppelbindungen tragen, Polyisocyanate sowie Verbindungen, die zur Amid und/oder Imidbildung befähigte Carbonsäure- und/oder Carbonsäureester- und/oder Carbonsäureanhydridgruppen enthalten.

Der Härter wird jeweils in solch einer Menge zugesetzt, daß das Molverhältnis der Aminogruppen des Copolymers (B) zu den reaktiven Gruppen des Vernetzers zwischen 0,3:1 und 3:1 liegt.

Als Härterkomponente geeignete Aminoplastharze sind bevorzugt Melamin- und/oder Benzoguanaminharze. Es handelt sich hierbei um veretherte Melamin- bzw. Benzoguanamin-Formaldehyd-Kondensationsprodukte. Die Verträglichkeit der Harze mit anderen Filmbildnern und Lösemitteln wird von der Kettenlänge des Veretherungsalkohols und dem Veretherungsgrad beeinflußt. Hauptsächliche Veretherungskomponenten sind n- und Isobutanol sowie Methanol. Eine sehr große Bedeutung haben die Hexamethoxymethylmelaminharze. Sie weisen aber den Nachteil auf, daß derartige Kombinationen erst bei Temperaturen oberhalb 150°C härten und oft ein Zusatz saurer Katalysatoren erforderlich ist. Die mit weniger Formaldehyd hergestellten und/oder mit sekundären bzw. tertiären Alkoholen veretherten Harze vernetzen dagegen z.T. bereits unterhalb von 100°C. Einsetzbar sind aber auch die entsprechenden Harnstoff- und Urethanharze.

Weiterhin als Vernetzer geeignet sind auch aliphatische Polyepoxidverbindungen von epoxidierten Ölen, z.B. epoxidiertes Leinöl oder epoxidiertes Sojaöl, epoxidierte cyclische Verbindungen wie Vinylcyclohexendiepoxid, Glycidylether von hydriertem Bisphenol A, 3,4-Epoxycyclohexylmethyl-3,4-epoxycyclohexancarboxylat, Epoxidharze auf Basis von Epichlorhydrin und mehrwertigen Alkoholen wie Pentaerythrit, Trimethylolpropan oder Sorbit, aromatische Epoxidharze, wie Polyglycidylether von mehrwertigen Phenolen, z.B. Glycidylether des 4,4′-Diphenylolmethans oder -propans oder Polyglycidylether von Novolaken, Glycidylester von aliphatischen oder aromatischen Polycarbonsäuren, z.B. Terephthalsäurediglydidylester, oder Glycidylmethacrylatcopolymere. Insbesondere für den Einsatz in der Autoreparaturlackierung sind Epoxidharze auf der Basis von zweikernigen Melaminharzen, umgesetzt mit Acrylamid und anschließender Epoxidierung der Acryl-Doppelbindung, geeignet.

Als Verbindungen oder Harze, die zur Michael-Addition befähigte Doppelbindungen tragen, kommen z.B. in Frage Acryl- und/oder Methacrylsäureester von mehrwertigen Alkoholen, wie Trimethylolethan- oder Trimethylolpropan-triacrylat und/oder die entsprechenden Methacrylsäureester, Butandioldiacrylat und/oder ungesättigte Polyester auf Basis von Fumar- und/oder Maleinsäure. Diese Polyester können in der Carbonsäurekomponente zusätzlich bis zu 70%, vorzugsweise bis zu 30%, gesättigte mindestens zweibasische Carbonsäureeinheiten enthalten, welche keine zur Michael-Addition befähigten Doppelbindungen enthalten, wie Ortho-, Iso- oder Terephthalsäure, Tetrahydrophthalsäure, Hexahydrophthalsäure, Adipinsäure. Anstelle von Säuren kann man bei der Herstellung der Polyester natürlich auch von den entsprechenden Anhydriden ausgehen. Als Alkohole kommen für die Herstellung der ungesättigten Polyester vorzugsweise Diole wie Äthylenglykol, 1,2- und 1,3-Propandiol, Diethylenglykol und/oder Dipropylenglykol in Betracht. Besonders reaktiv sind Kombinationen aus erfindungsgemäßen Polymerisatharzen mit mindestens trifunktionellen Acrylestern wie Glycerin, Trimethylolethan - bzw. -propantriacrylat, Pentaerythrittetracrylat. Solche Kombinationen härten auch unterhalb Raumtemperatur sehr schnell.

Als Härterkomponente geeignet sind weiterhin Polyisocyanate mit mindestens 2 Isocyanatgruppen pro Molekül. Als Di- oder Polyisocyanate sind beispielsweise geeignet: Aromatische Isocyanate wie z.B. 2,4-, 2,6-Toluylendiisocyanat und deren Gemische, 4,4′-Diphenylmethandiisocyanat, m-Phenylen-, p-Phenylen-, 4,4′-Diphenyl-, 1,5-Naphthalin-, 1,4-Naphthalin-, 4,4′-Toluidin-, Xylylendiisocyanat sowie substituierte aromatische Systeme wie z.B. Dianisidindiisocyanate, 4,4′-Diphenyletherdiisocyanate oder Chlorodiphenylendiisocyanate und höherfunktionelle aromatische Isocyanate wie z.B. 1,3,5-Triisocyanatobenzol, 4,4′-,4″-Triisocyanattriphenylmethan, 2,4,6-Triisocyanatotoluol und 4,4′-Diphenyldimethylmethan-2,2′,5,5′-tetraisocyanat; cycloaliphatische Isocyanate wie z.B. 1,3-Cyclopentan-, 1,4-Cyclohexan-, 1,2-Cyclohexan- und Isophorondiisocyanat; aliphatische Isocyanate wie z.B. Trimethylen-, Tetramethylen-, Pentamethylen-, Hexamethylen-, Trimethylhexamethylen-1,6-diisocyanat und Trishexamethylen-triisocyanat.

Geeignet sind weiterhin auch Polyisocyanat-Präpolymere. Zu nennen sind hierbei Addukte aus Toluylendiisocyanat und Trimethylolpropan, ein aus 3 Molekülen Hexamethylendiisocyanat gebildetes Biuret sowie die Trimeren des Hexamethylendiisocyanats und des 3,5,5-Trimethyl-1-isocyanato-3-isocyanatomethylcyclohexans. Kombinationen mit Polyisocyanaten oder Isocyanatgruppen tragenden Harzen vernetzen selbst bei Temperaturen unter 0°C sehr schnell.

Eingesetzt werden können aber auch die oben beschriebenen, mit üblichen Verkappungsmitteln wie z.B. Phenolen, Alkoholen, Acetessigsäureestern, Ketoxim- und ε-Caprolactam, umgesetzten Isocyanate. Diese Kombinationen sind bei Raumtemperatur stabil und härten im allgemeinen erst bei Temperaturen oberhalb von 100°C. In besonderen Fällen, z.B. bei Verwendung von Acetessigsäureestern zur Verkappung, kann auch bereits unter 100°C eine Vernetzung eintreten.

Geeignete Härter sind auch Verbindungen bzw. Harze, die Carbonsäure und/oder Carbonsäureester- und/oder Carbonsäureanhydridgruppen enthalten und die über Amid- bzw. Imidbildung mit den erfindungsgemäßen Polymeren reagieren. Die Härtungstemperatur hängt von der Reaktivität der im Kombinationspartner enthaltenen Carbonsäure-, Carbonsäureester- oder Carbonsäureanhydridgruppen ab. So gelingt es z.B. mit polyfunktionellen Verbindungen oder Harzen, die reaktive Esterbindungen der Malonsäure oder der Acetessigsäure tragen, Beschichtungsmittel zur Verfügung zu stellen, die bereits bei 80-120°C vernetzen, während bei Verwendung von gesättigten Alkydharzen Härtungstemperaturen von über 120°C, vorzugsweise sogar über 150°C, erforderlich sind.

Die erfindungsgemäßen Beschichtungsmittel können außerdem noch übliche Pigmente und Füllstoffe in üblichen Mengen, bevorzugt 0 bis 60 Gew.%, bezogen auf die Gesamtzusammensetzung, sowie weitere übliche Hilfs- und Zusatzstoffe wie z.B. Verlaufsmittel, Silikonöle, Weichmacher wie Phosphorsäureester und Phthalsäureester, viskositätskontrollierende Zusätze, Mattierungsmittel, UV-Absorber und Lichtschutzmittel in üblichen Mengen, bevorzugt 0,2 bis 10 Gew.%, bezogen auf die Gesamtzusammensetzung, enthalten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die erfindungsgemäßen Beschichtungsmittel eignen sich - wenn durch entsprechende Wahl der Härterkomponente niedrige Härtungstemperaturen zwischen 20 und 80°C angewandt werden können (s.o.) - für die Reparaturlackierung von Kraftfahrzeugen sowie insbesondere für die Verwendung als Grundierung und Füllermaterial.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1

In einem mit Rührer, Rückflußkühler, Thermometer und Zulaufeinrichtungen ausgestatteten Reaktionskessel werden 419,75 Teile Shellsol A® (Gemisch aus C3-C4-alkylsubstituierten Aromaten) und 400,00 Teile eines handelsüblichen Gemisches von Vinylestern von gesättigten aliphatischen Monocarbonsäuren mit überwiegend 10 C-Atomen, die am α-C-Atom verzweigt sind, vorgelegt.

In den Monomerentank I werden eingewogen und vermischt:

500,00    Teile Methylmethacrylat
300,00    Teile Hydroxydimethylpropylmethacrylamid
200,00    Teile Vinylpyrrolidon
20,00      Teile Mercaptoethanol

In den Monomerentank II werden 600 Teile Styrol eingewogen.

In den Initiatorzulauf werden eingewogen und vermischt:

26    Teile Dicumylperoxid,
78    Teile Shellsol A®

Die Vorlage wird auf 160-170°C aufgeheizt. Es wird der Inhalt von Monomerentank I und vom Initiatortank innerhalb von 4,5 h gleichmäßig in den Kessel dosiert. Der Inhalt des Monomerentanks II wird innerhalb von 4,5 h so zudosiert, daß in den ersten 90 min 1/6 der Styrolmenge, von der 91. bis zur 180. Minute 2/6 der Styrolmenge und in der restlichen Zulaufzeit die Hälfte der Gesamtstyrolmenge zudosiert werden.

Danach wird innerhalb von 1 h aus dem Initiatortank nochmals eine Mischung aus 15,0 Teilen Shellsol A® und 5,0 Teilen Dicumylperoxid zugegeben und im Anschluß an diese Zugabe noch eine weitere Stunde nachpolymerisiert.

Nun werden 507,3 Teile Shellsol A® abdestilliert, und es wird mit 507,3 Teilen Xylol angelöst. Die so erhaltene Copolymerisatlösung A hat einen Festkörper von 81,4% (1 h 130°C) und eine Viskosität (50%ig in Butylacetat) von 1,1 dPas (23°C). Der Restgehalt an freiem Vinylester-Monomer in der Lösung wurde mittels Gaschromatographie zu 0,5 Gew.% bestimmt. Dies entspricht einem Restmonomerengehalt von 3,77 Gew.%, bezogen auf die Gesamtmenge an eingesetztem Vinylester-Monomer.

In einem Edelstahlkessel mit Rührer, dampfbeheizter Kolonne und Kondensatabscheider weden 737,1 Teile der oben beschriebenen Copolymerisatlösung A, 216,5 Teile 1,3-Diaminopropan und 0,337 Teile Lithiumoctoat eingewogen und auf 140°C aufgeheizt. Die Temperatur wird dann langsam auf 160°C erhöht, wobei darauf zu achten ist, daß die Kolonnenkopftemperatur 90°C nicht übersteigt. Die Reaktionsmischung wird nun 12 h bei dieser Temperatur gehalten. Anschließend wird das überschüssige Diamin unter Vakuum abdestilliert, wobei mehrmals Portionen von 200 Teilen Diacetonalkohol zugegeben werden und dann zusammen mit dem Diamin abdestilliert werden. Danach wird mit 74,2 Teilen Shellsol A® und 412,1 Teilen n-Butanol angelöst.

Die so erhaltene Copolymerisatlösung 1 hat einen Festkörper von 62,7% (1 h 130°C), eine Viskosität (50%ig in Butanol) von 8,7 dPas (23°C) und ein Aminäquivalentgewicht von 452,4 (bezogen auf 62,7% Festkörper). Nach 9 Monaten Lagerung bei Raumtemperatur wurde die Viskosität der Copolymerisatlösung 1 erneut gemessen: Sie betrug nach Verdünnen mit Butanol auf einen Festkörper von 50 % 10,4 dPas (23°C).

30 Teile dieser Copolymerisatlösung 1 werden mit 20 Teilen eines aliphatischen Epoxidharzes mit einem Molgewicht von ca. 1200 und einem Epoxidäquivalentgewicht von ca. 300 vermischt und mit 7,5 Teilen Butylacetat verdünnt. Basis des eingesetzten Epoxidharzes ist ein zweikerniges Melaminharz, umgesetzt mit Acrylamid und anschließender Epoxidierung der Acryl-Doppelbindungen (Handelsname LSE 4103 der Firma Monsanto). Der so erhaltene Klarlack 1 wird mit einer Naßfilmstärke von 200 µm auf Glasplatten aufgerakelt und dann unter den in Tabelle 1 angegebenen Bedingungen getrocknet. Die resultierenden Beschichtungen wurden dann mit den in Tabelle 1 aufgeführten Methoden mit den ebenfalls in Tabelle 1 angegebenen Ergebnissen geprüft.

Zur Herstellung eines Klarlacks 2 werden 30 Teile der oben beschriebenen Copolymerisatlösung 1 mit 15,2 Teilen eines handelsüblichen epoxidierten Novolacs (Handelsprodukt D.E.N. 444 der Firma Dow Chemical) mit einem Epoxidäquivalentgewicht von 228, einer Viskosität von >40 dPas und einer mittleren Funktionalität von 3 bis 4 vermischt und mit 7,5 Teilen Butylacetat verdünnt. Dieser Klarlack 2 wird analog Klarlack 1 auf Glastafeln aufgerakelt, eingebrannt und analog Klarlack 1 die resultierende Beschichtung untersucht. Die Prüfergebnisse zeigt Tabelle 1.

8

Tabelle 1: Prüfergebnisse

|  | Lack 1 | Lack 2 |
|---|---|---|
| Filmstärke (trocken) (/um) | 60 | 60 |
| Pendelhärte nach König, nach 30 min Trocknung bei 100°C und anschließender Abkühlung von 4 h bei Raumtemperatur (s) | 100,8 | 189 |
| Pendelhärte nach König nach 7 Tagen Trocknung bei Raumtemperatur (s) | 142,8 | 72,8 |
| Benzintest[a] nach 30 min Trocknung bei 100°C und anschließender Abkühlung von 4 h bei Raumtemperatur | 0/0 | 0/0 |
| Benzintest[a] nach 7 Tagen Trocknung bei Raumtemperatur | 0/0 | 0/0 |

a: Mit handelsüblichem Superbenzin getränkte Filzplättchen (∅ 5 cm) werden für 5 min abgedeckt auf dem Film belassen. Anschließend wird die Markierung (0 = keine Markierung; 3 = deutliche Markierung) und die Erweichung des Films (0 = keine Erweichung; 3 = deutliche Erweichung) beurteilt.

Vergleichsbeispiel

Es wurde gemäß der Lehre des Beispiels 6 der US-A-4,120,839 ein aminogruppenhaltiges Copolymerisat durch Aminolyse eines alkylestergruppenhaltigen Copolymerisats, zu dessen Herstellung keine Vinylester-Monomeren eingesetzt wurden, hergestellt.

In den Monomerentank I werden eingewogen und vermischt:

1100 Teile Methylmethacrylat
400 Teile Butylmethacrylat
20 Teile Mercaptoethanol

In den Monomerentank II werden eingewogen und vermischt:

500 Teile Styrol
80 Teile einer handelsüblichen 75%igen Lösung von t-Butylperacetat in Isododecan

In den Initiatortank werden 8 Teile einer handelsüblichen Lösung von t-Butylperacetat in Isodecan eingewogen.

In einen mit Rührer, Rückflußkühler, Thermometer und Zulaufeinrichtungen versehenen Reaktionskessel werden 500 Teile Butylglykol vorgelegt und auf 150°C aufgeheizt. Dann wird der Inhalt von Monomerentank I und Monomerentank II innerhalb von 9,25 h mit einer konstanten Zugabemenge zudosiert. Die Temperatur wird dann noch 15 min bei 150°C gehalten, ehe innerhalb von 15 min die Mischung aus dem Initiatortank zugefügt wird. Im Anschluß an diese Zugabe wird noch 1 weitere Stunde nachpolymerisiert.

Die so erhaltene Copolymerisatlösung A' weist einen Festkörper von 79,6% (1 h 130°C) und eine Viskosität (50%ig in Butylacetat) von 1,25 dPas (23°C) auf.

In einem Edelstahlkessel mit Rührer, dampfbeheizter Kolonne und Kondensatabscheider werden 968,8 Teile der Copolymerisatlösung A' und 206,8 Teile Xylol eingewogen und auf 70°C aufgeheizt. Es werden 159,6 Teile Diethylentriamin (Aminäquivalentgewicht 33,6) zugefügt und weiter bis auf maximal 145°C aufgeheizt. Regelmäßig im Abstand von 90 min werden der Festkörper und das Aminäquivalentgewicht der Lösung bestimmt. Die Temperatur wurde so lange bei 145°C gehalten, bis die Copolymerisatlösung einen Festkörper von 74,3 % (15 min 180°C) und ein Aminäquivalentgewicht von 398,2 aufwies. Danach wird mit 42,9 Teilen Xylol angelöst. Mit Butylglykol wird auf einen theoretischen Festkörper von 65 % verdünnt. Die erhaltene Copolymerisatlösung A' hatte einen Festkörper von 68 % (15 min 180°C) und eine Viskosität von >40 dPas (50%ig in Butanol) und 16-17 dPas (35%ig in Butanol).

Nach 3 Monaten Lagerung bei RT war die Lösung A' beim Anlösen nicht mehr löslich in Butanol.

Ein Vergleich der in Beispiel 1 erhaltenen Copolymerisatlösung A mit der im Vergleichsbeispiel erhaltenen Copolymerisatlösung A' zeigt, daß die Lösung des erfindungsgemäßen Copolymerisats A mit 8,7 dPas (23°C, 50%ig in Butanol) eine wesentlich niedrigere Viskosität aufweist als die Lösung des gemäß US-A- 4,120,839 hergestellten Copolymerisats A' mit 16-17 dPas (23°C, 35%ig in Butanol).

Somit können unter Verwendung der erfindungsgemäßen Copolymerisate als Bindemittel Beschichtungssysteme mit hohem Festkörpergehalt und damit geringer Lösemittelbelastung der Umwelt beim Trocknen der Filme hergestellt werden.

Die unter Verwendung der Copolymerisatlösung A gemäß Beispiel 1 hergestellten Beschichtungsmittel führen außerdem (vgl. Tabelle 1) zu Beschichtungen mit guter Härte und Benzinbeständigkeit. Je nach eingesetzter Härterkomponente (vgl. Lack 1 und Lack 2 in Tabelle 1) eignen sich diese Beschichtungsmittel auch sehr gut für die Autoreparturlackierung (niedrige Einbrenntemperaturen).

## Patentansprüche

1) Aminogruppenhaltiges Copolymerisat (B), das aus - mittels radikalisher Lösungspolymerisation hergestellten - alkylestergruppenhaltigen Copolymerisaten (A) durch Aminolyse herstellbar ist, <u>dadurch gekennzeichnet, daß</u> das Copolymerisat (B) herstellbar ist, indem

(A) aus

a1) 5 bis 25 Gew.%, bevorzugt 10 bis 20 Gew.%, eines oder mehrerer Vinylester von Monocarbonsäuren, bevorzugt Vinylester von in $\alpha$-Stellung verzweigten Monocarbonsäuren mit 5 bis 15 C-Atomen je Molekül,

a2) 10 bis 50 Gew.%, bevorzugt 20 bis 45 Gew.%, eines oder mehrerer vinylaromatischer Kohlenwasserstoffe,

a3) 10 bis 40 Gew.%, bevorzugt 15 bis 35 Gew.%, eines oder mehrerer Alkylester von aliphatischen, olefinisch ungesättigten Carbonsäuren mit 1 bis 6 C-Atomen, bevorzugt 1 bis 4 C-Atomen, im Alkylrest und

a4) 0 bis 40 Gew.% anderer ethylenisch ungesättigter, copolymerisierbarer Monomerer,

- wobei die Summe der Komponenten (a1) bis (a4) 100 Gew.% beträgt -

durch radikalische Lösungspolymerisation bei Temperaturen von 130 bis 200°C, bevorzugt 150 bis 180°C, ein alkylestergruppenhaltiges Copolymerisat (A) synthetisiert worden ist, indem

I) mindestens 60 Gew.%, bevorzugt 100 Gew.%, der Gesamtmenge der Komponente a1 vorgelegt werden,

II) die Komponenten a2 bis a4 und der ggf. vorhandene Rest der Komponente a1 innerhalb eines für alle Komponenten gleich langen Monomerenzugabezeitraumes so zudosiert werden, daß

1) die pro Zeiteinheit zugegebene Menge der Komponente a1 innerhalb des Monomerenzugabezeitraumes konstant bleibt oder abnimmt,

2) die pro Zeiteinheit zugegebene Menge der Komponenten a3 und a4 innerhalb des Monomerenzugabezeitraumes konstant bleibt und

3) die innerhalb des ersten Drittels des Monomerenzugabezeitraumes zugegebene Menge der Komponente a2 15 bis 30 Gew.%, bevorzugt 18 bis 26 Gew.%, der Gesamtmenge der Komponente a2, innerhalb des zweiten Drittels 25 bis 40 Gew.%, bevorzugt 30 bis 38 Gew.%, und innerhalb des letzten Drittels 35 bis 60 Gew.%, bevorzugt 40 bis 50 Gew.%, der Gesamtmenge der Komponente a2 beträgt und

(B) das Copolymerisat (A) mit Polyaminen zu einem aminogruppenhaltigen Copolymerisat (B) mit einer Aminzahl von 30 bis 150 mg KOH/g und einem mittleren Molekulargewicht (Zahlenmittel) des Copolymerisats (B) von 1500 bis 8000 umgesetzt worden ist.

2. Verfahren zur Herstellung von aminogruppenhaltigen Copolymerisaten durch Aminolyse von - mittels radikalischer Lösungspolymerisation hergestellten - alkylestergruppenhaltigen Copolymerisaten (A), <u>dadurch gekennzeichnet, daß</u>

(A)

a1) 5 bis 25 Gew.%, bevorzugt 10 bis 20 Gew.%, eines oder mehrerer Vinylester von Monocarbonsäuren, bevorzugt Vinylester von in α-Stellung verzweigten Monocarbonsäuren mit 5 bis 15 C-Atomen je Molekül,

a2) 10 bis 50 Gew.%, bevorzugt 20 bis 45 Gew.%, eines oder mehrerer vinylaromatischer Kohlenwasserstoffe,

a3) 10 bis 40 Gew.%, bevorzugt 15 bis 35 Gew.%, eines oder mehrerer Alkylester von aliphatischen, olefinisch ungesättigten Carbonsäuren mit 1 bis 6 C-Atomen, bevorzugt 1 bis 4 C-Atomen, im Alkylrest und

a4) 0 bis 40 Gew.% anderer ethylenisch ungesättigter, copolymerisierbarer Monomerer, wobei die Summe der Komponenten a1 bis a4 jeweils 100 Gew.% ergibt,

bei Temperaturen von 130 bis 200°C, bevorzugt 150 bis 180°C, zu einem Copolymerisat (A) umgesetzt werden, wobei

I) mindestens 60 Gew.%, bevorzugt 100 Gew.%, der Gesamtmenge der Komponente a1 vorgelegt werden,

II) die Komponenten a2 bis a4 und der ggf. vorhandene Rest der Komponente a1 innerhalb eines für alle Komponenten gleich langen Monomerenzugabezeitraumes so zudosiert werden, daß

1) die pro Zeiteinheit zugegebene Menge der Komponente a1 innerhalb des Monomerenzugabezeitraumes konstant bleibt oder abnimmt,

2) die pro Zeiteinheit zugegebene Menge der Komponenten a3 und a4 innerhalb des Monomerenzugabezeitraumes konstant bleibt und

3) die innerhalb des ersten Drittels des Monomerenzugabezeitraumes zugegebene Menge der Komponente a2 15 bis 30 Gew.%, bevorzugt 18 bis 26 Gew.%, der Gesamtmenge der Komponente a2, innerhalb des zweiten Drittels 25 bis 40 Gew.%, bevorzugt 30 bis 38 Gew.% und innerhalb des letzten Drittels 35 bis 60 Gew.%, bevorzugt 40 bis 50 Gew.%, der Gesamtmenge der Komponente a2 beträgt und

(B) das Copolymerisat (A) mit Polyaminen zu einem aminogruppenhaltigen Copolymerisat (B) mit einer Aminzahl von 30 bis 150 mg KOH/g und einem mittleren Molekulargewicht (Zahlenmittel) des Copolymerisats (B) von 1500 bis 8000 umgesetzt wird.

3. Aminogruppenhaltiges Copolymerisat (B) nach Anspruch 1 oder Verfahren nach Anspruch 2, dadurch gekennzeichnet, daß das Copolymerisat (B) eine Aminzahl von 50 bis 120 mg KOH/g aufweist.

4. Aminogruppenhaltiges Copolymerisat (B) oder Verfahren nach einem der Ansprüche 1 bis 3, dadurch gekennzeichnet, daß als Komponente a1 ein oder mehrere Vinylester von gesättigten aliphatischen Monocarbonsäuren mit 9 bis 11 C-Atomen, die am α-C-Atom verzweigt sind, eingesetzt werden.

5. Beschichtungsmittel, dadurch gekennzeichnet, daß es das aminogruppenhaltige Copolymerisat (B) nach einem der Ansprüche 1, 3 oder 4 als Bindemittel enthält.

6. Beschichtungsmittel nach Anspruch 5, dadurch gekennzeichnet, daß es Aminoplastharze als Härter enthält.

7. Beschichtungsmittel nach Anspruch 5, dadurch gekennzeichnet, daß es Polyepoxidverbindungen als Härter enthält.

8. Beschichtungsmittel nach Anspruch 5, dadurch gekennzeichnet, daß es Polyisocyanate als Härter enthält.

9. Beschichtungsmittel nach Anspruch 5, dadurch gekennzeichnet, daß es Polymere mit ungesättigten acrylischen Doppelbindungen als Härter enthält.

10. Beschichtungsmittel nach Anspruch 5, dadurch gekennzeichnet, daß es Polymere mit Acetoacetatgruppen als Härter enthält.

11. Verwendung der aminogruppenhaltigen Copolymerisate (B) nach einem der Ansprüche 1, 3 oder 4 als Bindemittel in Beschichtungsmitteln für die Autoreparaturlackierung.

12. Verwendung der aminogruppenhaltigen Copolymerisate (B) nach einem der Ansprüche 1, 3 oder 4 als Bindemittel in Klarlacken oder pigmentierten Decklacken.

## Claims

1. Copolymer (B) containing amino groups, which can be prepared by aminolysis from copolymers (A) - prepared by means of free radical solution polymerisation - containing alkyl ester groups, characterised in that the copolymer (B) can be prepared by a procedure in which

(A) a copolmyer (A) containing alkyl ester groups has been synthesised from

a1) 5 to 25% by weight, preferably 10 to 20% by weight, of one or more vinyl esters of monocarboxylic acids, preferably vinyl esters of monocarboxylic acids having 5 to 15 C atoms per molecule and branched in the α-position,

a2) 10 to 50% by weight, preferably 20 to 45% by weight, of one or more vinylaromatic hydrocarbons,

a3) 10 to 40% by weight, preferably 15 to 35% by weight, of one or more alkyl esters of alipha tic, olefinically unsaturated carboxylic acids having 1 to 6 C atoms, preferably 1 to 4 C atoms, in the alkyl radical and

a4) 0 to 40% by weight of other ethylenically unsaturated copolmyerisable monomers, - the sum of components (a1) to (a4) in each case being 100% by weight -

by free radical solution polymerisation at temperatures of 130 to 200°C, preferably 150 to 180°C, by

I) initially introducing at least 60% by weight, preferably 100% by weight, of the total amount of com ponent a1,

II) metering in components a2 to a4 and any remainder of component a1 within a monomer addition period which is of equal length for all the components such that

1) the amount of component a1 added per unit time remains constant or decreases within the monomer addition period,

2) the amount of components a3 and a4 added per unit time remains constant within the mono mer addition period and

3) the amount of component a2 added within the first third of the monomer addition period is 15 to 30% by weight, preferably 18 to 26% by weight, of the total amount of component a2, and within the second third is 25 to 40% by weight, preferably 30 to 38% by weight, and within the last third is 35 to 60% by weight, preferably 40 to 50% by weight, of the total amount of component a2, and

(B) the copolymer (A) has been reacted with polyamines to give a copolymer (B) containing amino groups with an amine number of 30 to 150 mg of KOH/g and an average molecular weight (number-average) of the copolymer (B) of 1,500 to 8,000.

2. Process for the preparation of a copolmyer containing amino groups by aminolysis of copolymers (A) - prepared by means of free radical solution polymerisation - containing alkyl ester groups, characterised in that

(A)

a1) 5 to 25% by weight, preferably 10 to 20% by weight, of one or more vinyl esters of mono car boxylic acids, preferably vinyl esters of monocarboxylic acids having 5 to 15 C atoms per molecule and branched in the a-position,

a2) 10 to 50% by weight, preferably 20 to 45% by weight, of one or more vinylaromatic hydro car bons,

a3) 10 to 40% by weight, preferably 15 to 35% by weight, of one or more alkyl esters of alipha tic, olefinically unsaturated carboxylic acids having 1 to 6 C atoms, preferably 1 to 4 C atoms, in the alkyl radical and

a4) 0 to 40% by weight of other ethylenically unsaturated copolymerisable monomers, the sum of components a1 to a4 in each case being 100% by weight,

are reacted at temperatures of 130 to 200°C, preferably 150 to 180°C, to give a copolymer (A),

I) at least 60% by weight, preferably 100% by weight, of the total amount of component a1 is intro duced,

II) components a2 to a4 and any remainder of component a1 are metered in within a monomer ad dition period which is of equal length for all the components such that

1) the amount of component a1 added per unit time remains constant or decreases within the monomer addition period,

2) the amount of components a3 and a4 added per unit time remains constant within the mono mer addition period and

3) the amount of component a2 added within the first third of the monomer addition period is 15 to 30% by weight, preferably 18 to 26% by weight, of the total amount of component a2, and within the second third is 25 to 40% by weight, preferably 30 to 38% by weight, and within the last third is 35 to 60% by weight, preferably 40 to 50% by weight, of the total amount of component a2, and

(B) the copolymer (A) is reacted with polyamines to give a copolymer (B) containing amino groups and having an amine number of 30 to 150 mg of KOH/g and an average molecular weight (number-average) of the copolymer (B) of 1,500 to 8,000.

3. Copolymer (B) containing amino groups according to Claim 1 or process according to Claim 2, characterised in that the copolymer (B) has an amine number of 50 to 120 mg of KOH/g.

4. Copolymer (B) containing amino groups or process according to any one of Claims 1 to 3, characterised in that one or more vinyl esters of saturated aliphatic monocarboxylic acids having 9 to 11 C atoms and branched on the $\alpha$-C atom are employed as component a1.

5. Coating agent, characterised in that it contains a copolymer (B) containing amino groups according to any one of Claims 1, 3 or 4 as the binder.

6. Coating agent according to Claim 5, characterised in that it contains aminoplast resins as the binder.

7. Coating agent according to Claim 5, characterised in that it contains polyepoxide compounds as the hardener.

8. Coating agent according to Claim 5, characterised in that it contains polyisocyanates as the hardener.

9. Coating agent according to Claim 5, characterised in that it contains polymers having unsaturated acrylic double bonds as the hardener.

10. Coating agent according to Claim 5, characterised in that it contains polymers having acetoacetate groups as the hardener.

11. Use of a copolymer (B) containing amino groups according to any one of Claims 1, 3 or 4 as a binder in coating agents for automobile repair lacquering.

12. Use of a copolymer (B) containing amino groups according to any one of Claims 1, 3 or 4 as a binder in clear lacquers or pigmented top lacquers.


**Revendications**

1 - Copolymère (B) contenant des groupes amino, qui est susceptible d'être préparé par aminolyse à partir de copolymères (A) contenant des groupes ester alkylique - préparés par polymérisation radicalaire en solution -, caractérisé par le fait que le copolymère (B) est susceptible d'être préparé

(A) en synthétisant un copolymère (A) contenant des groupes ester alkylique, par polymérisation radicalaire en solution à des températures de 130 à 200°C, de préférence de 150 à 180°C, à partir de:

(a1) 5 à 25% en poids, de préférence 10 à 20% en poids, d'un ou plusieurs esters vinyliques d'acides monocarboxyliques, de préférence d'esters vinyliques d'acides monocarboxyliques ramifiés en position $\alpha$, présentant 5 à 15 atomes de carbone par molécule ;

(a2) 10 à 50% en poids, de préférence 20 à 45% en poids, d'un ou plusieurs hydrocarbures vinylaromatiques ;

(a3) 10 à 40% en poids, de préférence 15 à 35% en poids, d'un ou plusieurs esters alkyliques d'acides carboxyliques à insaturation oléfinique, aliphatiques, ayant 1 à 6 atomes de carbone, de préférence 1 à 4 atomes de carbone, dans le reste alkyle ; et

(a4) 0 à 40% en poids d'autres monomères copolymérisables, à insaturation éthylénique,

- la somme des composants (a1) à (a4) s'élevant à 100% en poids -, où

(I) au moins 60% en poids, de préférence 100% en poids, de la quantité totale du composant (a1) sont chargés initialement ;s

(II) les composants (a2) à (a4) et le reste, éventuellement présent, du composant (a1) sont ajoutés de façon dosée dans un intervalle de temps d'addition des monomères de longueur égale pour tous les composants, de telle sorte que :

(1) la quantité ajoutée par unité de temps du composant (a1) reste constante ou diminue dans l'intervalle de temps d'addition des monomères ;

(2) la quantité ajoutée par unité de temps des composants (a3) et (a4) reste constante dans l'intervalle de temps d'addition des monomères ; et

(3) la quantité du composant (a2) ajoutée dans le premier tiers de l'intervalle de temps d'addition des monomères s'élève à 15 à 30% en poids, de préférence à 18 à 26% en poids, de la quantité totale du composant (a2), celle ajoutée dans le deuxième tiers, à 25 à 40% en poids, de préférence à 30 à 38% en poids, et celle ajoutée dans le troisième tiers, à 35 à 60% en poids, de préférence à 40 à 50% en poids, de la quantité totale du composant (a2) ; et

(B) en faisant réagir le copolymère (A) avec des polyamines pour obtenir un copolymère (B) contenant des groupes amino, ayant un indice d'amine de 30 à 150 mg de KOH/g et une masse moléculaire moyenne (moyenne en nombre) du copolymère (B) de 1500 à 8000.

2 - Procédé de fabrication de copolymères contenant des groupes amino par aminolyse de copolymères (A) contenant des groupes ester alkylique - préparés par polymérisation radicalaire en solutions -, caractérisé par le fait que :

(A) on fait réagir, à des températures de 130 à 200°C, de préférence de 150 à 180°C, pour obtenir un copolymère (A) :

(a1) 5 à 25% en poids, de préférence 10 à 20% en poids, d'un ou plusieurs esters vinyliques d'acides monocarboxyliques, de préférence d'esters vinyliques d'acides monocarboxyliques ramifiés en position α, présentant 5 à 15 atomes de carbone par molécule ;

(a2) 10 à 50% en poids, de préférence 20 à 45% en poids, d'un ou plusieurs hydrocarbures vinyl aromatiques ;

(a3) 10 à 40% en poids, de préférence 15 à 35% en poids, d'un ou plusieurs esters alkyliques d'acides carboxyliques à insaturation oléfinique, aliphatiques, ayant 1 à 6 atomes de carbone, de préférence 1 à 4 atomes de carbone, dans le reste alkyle ; et

(a4) 0 à 40% en poids d'autres monomères copolymérisables, à insaturation éthylénique,

- la somme des composants (a1) à (a4) s'élevant à 100% en poids -, où

(I) au moins 60% en poids, de préférence 100% en poids, de la quantité totale du composant (a1) sont chargés initialement ;

(II) les composants (a2) à (a4) et le reste, éventuellement présent, du composant (a1) sont ajoutés de façon dosée dans un intervalle de temps d'addition des monomères de longueur égale pour tous les composants, de telle sorte que :

(1) la quantité ajoutée par unité de temps du composant (a1) reste constante ou diminue dans l'intervalle de temps d'addition des monomères ;

(2) la quantité ajoutée par unité de temps des composants (a3) et (a4) reste constante dans l'intervalle de temps d'addition des monomères ; et

(3) la quantité du composant (a2) ajoutée dans le premier tiers de l'intervalle de temps d'addition des monomères s'élève à 15 à 30% en poids, de préférence à 18 à 26% en poids, de la quantité totale du composant (a2), celle ajoutée dans le deuxième tiers, à 25 à 40% en poids, de préférence à 30 à 38% en poids, et celle ajoutée dans le troisième tiers, à 35 à 60% en poids, de préférence à 40 à 50% en poids, de la quantité totale du composant (a2) ; et

(B) en faisant réagir le copolymère (A) avec des polyamines pour obtenir un copolymère (B) contenant des groupes amino, ayant un indice d'amine de 30 à 150 mg de KOH/g et une masse moléculaire moyenne (moyenne en nombre) du copolymère (B) de 1500 à 8000.

3 - Copolymère (B) contenant des groupes amino selon la revendication 1 ou procédé selon la revendication 2, caractérisé par le fait que le copolymère (B) présente un indice d'amine de 50 à 120 mg de KOH/g.

4 - Copolymère (B) contenant des groupes amino ou procédé selon l'une des revendications 1 à 3, caractérisé par le fait que, comme composant (a1), sont utilisés un ou plusieurs esters vinyliques d'acides monocarboxyliques à insaturation aliphatique, ayant 9 à 11 atomes de carbone, qui sont ramifiés sur l'atome de carbone en α.

5 - Agent de revêtement caractérisé par le fait qu'il contient en tant que liant le copolymère (B) à teneur en groupes amino tel que défini à l'une quelconque des revendications 1, 3 ou 4.

6 - Agent de revêtement selon la revendication 5, caractérisé par le fait qu'il contient des résines aminoplastes comme durcisseur.

7 - Agent de revêtement selon la revendication 5, caractérisé par le fait qu'il contient des composés polyépoxydiques comme durcisseur.

8 - Agent de revêtement selon la revendication 5, caractérisé par le fait qu'il contient des polyisocyanates comme durcisseur.

9 - Agent de revêtement selon la revendication 5, caractérisé par le fait qu'il contient, comme durcisseur, des polymères présentant des doubles liaisons acryliques insaturées.

10 - Agent de revêtement selon la revendication 5, caractérisé par le fait qu'il contient, comme durcisseur, des polymères comportant des groupes acétoacétate.

11 - Utilisation des copolymères (B) contenant des groupes amino tels que définis à l'une des revendications 1, 3 ou 4, comme liant dans des agents de revêtement pour le laquage de réparation des automobiles.

12 - Utilisation des copolymères (B) contenant des groupes amino tels que définis à l'une des revendications 1, 3 ou 4, en tant que liant dans des laques transparentes ou des laques de recouvrement pigmentées.